# EUROPEAN PATENT APPLICATION

(11) **EP 2 050 620 A1**
(43) Date of publication of application: **22.04.2009**
(21) Application number: 07805910.2
(22) Date of filing: 09.08.2007
(51) Int. Cl.: B60R 7/06, B60R 21/045

(54) **STRUCTURE FOR INSTALLING ARTICLE STORAGE APPARATUS FOR VEHICLE**

(30) Priority: 10.08.2006 JP 2006217697
(71) Applicant: Calsonic Kansei Corporation, Saitama 331-0823 (JP)
(72) Inventor: HARADA, Noriji, Saitama 3310823 (JP)
(74) Representative: Ilgart, Jean-Christophe
(86) International application number: PCT/JP2007/065579
(87) International publication number: WO 2008/018525

(57) **Abstract**

A mounting structure of a container device that is intended for use in a vehicle mounts a container device 1 that is installed within an instrument panel of a vehicle upon a member of the vehicle body thereof that is in turn installed within the instrument panel thereof, wherein the container device 1 includes a container device body 2, and a lid body 3 that is mounted upon an opening portion of the container device body 2 so as to be capable of being opened and closed thereupon. The container device body 2 is formed into a primary storage portion 11 and a component for mounting upon the member of the vehicle body 13, the component for mounting upon the member of the vehicle body 13 thereof further including a mounting perforation 12 with respect to the member of the vehicle body thereof, and the mounting perforation of the component for mounting upon the member of the vehicle body 13 is formed into approximately a shape of a droplet of water, the shape thereof further comprising a partial angle portion 15.

## Description

### TECHNICAL FIELD

The present invention relates to a mounting structure of a container device that is intended for use in a vehicle.

### BACKGROUND ART

An instrument panel is installed upon a fore portion of an interior of a passenger compartment of a vehicle, such as an automobile. A container device, such as a glove compartment, is installed upon a portion of the instrument panel that faces a passenger seat therein. A technology has been proposed such that the container device be designed so as to allow the container device to be capable of absorbing a force applied to a knee or the like of a passenger riding in the passenger seat of the vehicle, for example, on a vehicular collision (for reference, see Japanese Patent Application Laid Open No. 2003-104130).

### DISCLOSURE OF INVENTION

### PROBLEMS THE INVENTION IS INTENDED TO SOLVE

With regard to a mounting structure for a container device for use in a vehicle that is disclosed in Japanese Patent Application Laid Open No. 2003-104130, however, a problem arises in that the container device is made so as to form a fragile portion across every surface of an overall attachment region thereof, as well as to form a cutout portion in a delta shape within an intersection component of the fragile portion thereof. Thus, it is not possible to cause a performance of an energy to be absorbed by causing only a component for mounting upon a member of a vehicle body thereof to break with regard to a force being applied thereupon by way of the knee of the passenger in the passenger's seat thereof, such that the container device is broken into a plurality of fragments by the force that is applied thereupon by way of the knee of the passenger in the passenger's seat thereof, rendering the container device unusable thereafter as a consequence.

### MEANS TO SOLVE THE PROBLEMS

It is an object of the present invention to provide a mounting structure of a container device that is intended for use in a vehicle that may be reused easily and inexpensively.

In order to accomplish the object, a mounting structure of a container device that is intended for use in a vehicle, according to an embodiment of the present invention is configured to mount the container device that is installed upon an interior portion of an instrument panel on a member of a vehicle body, the container device including a container device body and a lid body that is attached so as to be capable of being opened and closed upon an opening portion of the container device body.

The container device body is formed from a primary storage portion and a member mounting component including one or more mounting perforations with respect to the member of the vehicle body, wherein the mounting perforation of the member mounting component is formed in an approximate shape of a drop of water, having a partial angular portion.

According to the present invention, because the container device body is formed into the primary storage portion and the member mounting component including the mounting perforation, the member mounting component is configured to be capable of causing a performance of an absorption of an energy by causing only a breakage of the member mounting component with respect to a force that is applied to a knee of a passenger who is seated upon a passenger's seat of the vehicle. After the breakage of the member mounting component, the primary storage portion is preserved, thereby facilitating a reuse thereof easily and inexpensively by replacing only the component for mounting upon the member of the vehicle body. In addition, whereas the force that is applied thereupon by way of the knee of the passenger who is seated upon the passenger's seat of the vehicle, and a recoil thereof, acts upon the mounting perforation of the component for mounting upon the member of the vehicle body, the mounting perforation is presumed to be formed in approximately a shape of a droplet of water, including a partial angle portion, causing a concentration of a stress to arise upon the partial angle portion thereof, and thereby allowing the partial angle portion thereof to be set to an origin point of the breakage thereof.

By forming a joining, with a depression portion, between the angle portion of each of the mounting perforations each of which are formed in approximately the shape of the droplet of water with respect to the component for mounting upon the member of the vehicle body, it is possible to cause the performance of the absorption of the energy with respect to the force that is applied thereupon by way of the knee of the passenger who is seated in the passenger's seat of the vehicle, while causing the breakage from each respective angle portion, and in a line with the depression portion, thereby facilitating an effecting of an energy absorption performance in accordance with a design of the component for mounting upon the member of the vehicle body. In addition, it would also be easy thereby, as an instance thereof, to add a design that would satisfy a safety condition of such as a control of a movement of a pelvic region of the passenger who is seated upon the passenger's seat of the vehicle, or another safety condition thereof.

In addition to forming the depression portion in a V-shaped depression, the V-shaped depression is configured such that an inner incline portion thereof is in a greater relief than an outer incline portion thereof, thereby giving rise to a concentration of a stress upon the V-shaped depression by way of a differential of an intensity that arises from a differential of a thickness of both sides of the V-shaped depression, in turn thus facilitating an ease of breaking the V-shaped depression.

In addition to treating the depression as the V-shaped depression, configuring a general surface portion that is contiguous with the inner incline portion of the V-shaped depression to be lower than a general surface portion that is contiguous with the outer incline portion thereof causes a shearing force to arise upon the V-shaped depression by way of a height differential between both of the general surface portions of the V-shaped depression thereof, and, as a consequence thereof, it is possible to break the V-shaped depression more easily than would otherwise be possible.

The present application is based on and claims priority from Japanese Patent Application Number 2006-217697, filed on August 10, 2006, the disclosure of which is hereby incorporated by reference herein in its entirety.

### BRIEF DESCRIPTION OF THE DRAWINGS

FIG. 1 is a perspective view of a container device that is intended for use in a vehicle according to an embodiment of the present invention, as viewed from an interior rear surface thereof.
FIG. 2 is a partially enlarged perspective view of a component for mounting upon a member of a vehicle body that is shown in FIG. 1.
FIG. 3 is a partially enlarged perspective view of a mounting perforation that is shown in FIG. 2.
FIG. 4 is a sectional view of a portion A - A, i.e., a depression that is shown in FIG. 2.
FIG. 5 is a sectional view of another instance of the portion A - A, i.e., the depression that is shown in FIG. 2.
FIG. 6 is a sectional view of another instance of the portion A - A, i.e., the depression that is shown in FIG. 2.

### DESCRIPTION OF REFERENCE NUMERALS

1. Container Device
2. Container device body
3. Lid Body
11. Primary Storage Portion
12. Mounting Perforation
13. Component for Mounting Upon Member of Vehicle Body
15. Angle Portion
18. Depression Portion
21. V-shaped Depression
21a. Inner incline portion
21b. Outer incline portion
22. General Surface Portion
23. General Surface Portion

### BEST MODE FOR CARRYING OUT THE INVENTION

Following is a description of embodiments that represent a best mode for carrying out the present invention, with reference to the accompanying drawings.

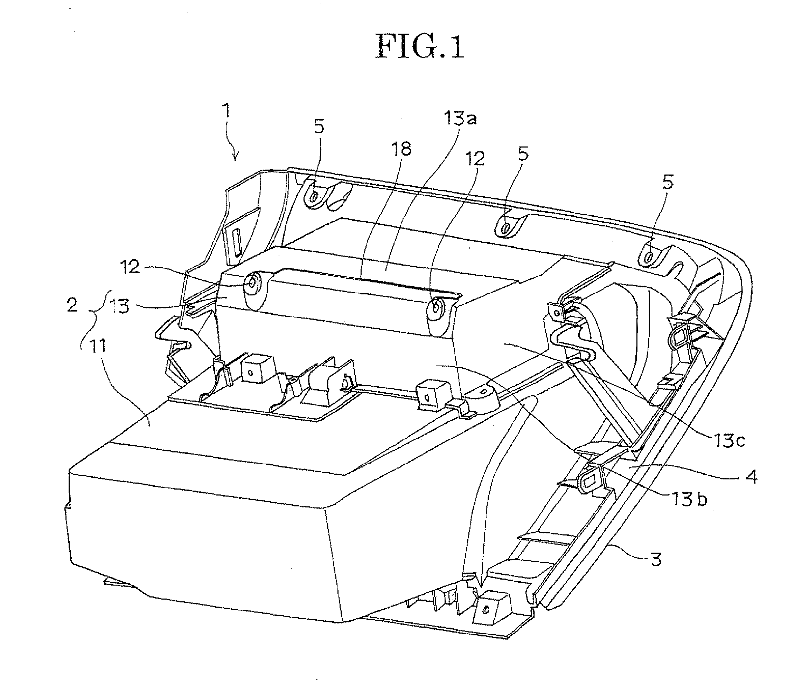

FIG. 1 to FIG. 6 illustrate an embodiment according to the present invention.

First, an instrument panel is installed within a fore portion of a passenger compartment of a vehicle, such as an automobile. A container device 1, such as a glove compartment, is installed in a passenger seat side portion of the instrument panel, such as is shown in FIG. 1.

The container device 1 is fitted within the instrument panel, and is also mounted upon a member of a vehicle body (not shown) that is placed within an interior portion of the instrument panel. The member of the vehicle body is a reinforcing material that extends in approximately a direction of a width of the vehicle, forming a join between and left and a right panel of the vehicle body. As an instance thereof, the member of the vehicle body would be used as such as a steering column support member, by providing an anchor for the steering column of the vehicle.

The container device 1 includes a container device body 2, which is formed in a shape of a receptacle that is capable of storing an item, and a lid body 3, which is mounted upon an opening portion of the container device body 2 so as to be capable of being opened and closed. In such a circumstance, the opening portion thereof is formed in a fore surface of the container device body 2. A flange portion 4 is installed upon a border of the opening portion of the container device body 2. In addition, the lid body 3 has a size that is approximately equal to the flange portion 4 thereof, and is configured so as to be capable of fitting together with the flange portion 4 thereof. The lid body 3 is treated as a component that opens and closes the opening portion by rotating up and down, the rotation thereof centering upon a hinge unit that is installed within a lower edge portion of the flange portion 4, i.e., a downward opening type of lid body. It is to be understood that one or more mounting perforations 5 are provided as appropriate in the edge portion of the flange portion 4, and with respect to such as the instrument panel.

According to the embodiment, the container device 1 is configured in a form that would be capable of absorbing a force that would be applied thereupon by way of a knee of a passenger who is seated upon a passenger seat of a vehicle, in an instance such as a vehicular collision thereof.

As a consequence thereof, first, the container device body 2 is formed separately into a primary storage portion 11 and a member mounting component for mounting upon the member of the vehicle body 13, which includes a plurality of mounting perforations 12 provided in the member of the vehicle body. The component for mounting upon the member of the vehicle body 13 is installed upon a component with respect to the container device body 2 that is in a close proximity to the member of the vehicle body thereof.

In the present circumstance, it is desirable that the component for mounting upon the member of the vehicle body 13 be configured as a portion of a storage space with respect to the container device body 2, rather than merely as being a component for mounting thereof. As a consequence thereof, the container device body 2 is configured from the primary storage unit 11, wherein a portion of a wall thereof is removed, and the component for mounting upon the member of the vehicle body 13, which seals the portion of the wall of the container device body 2 that is removed therefrom. As an instance thereof, the component for mounting upon the member of the vehicle body 13 anchors to the container device body 2 by way of such as an anchor bracket. In such a circumstance, the component for mounting upon the member of the vehicle body 13 is installed upon an approximately fore semi portion of an upper wall of the container device body 2.

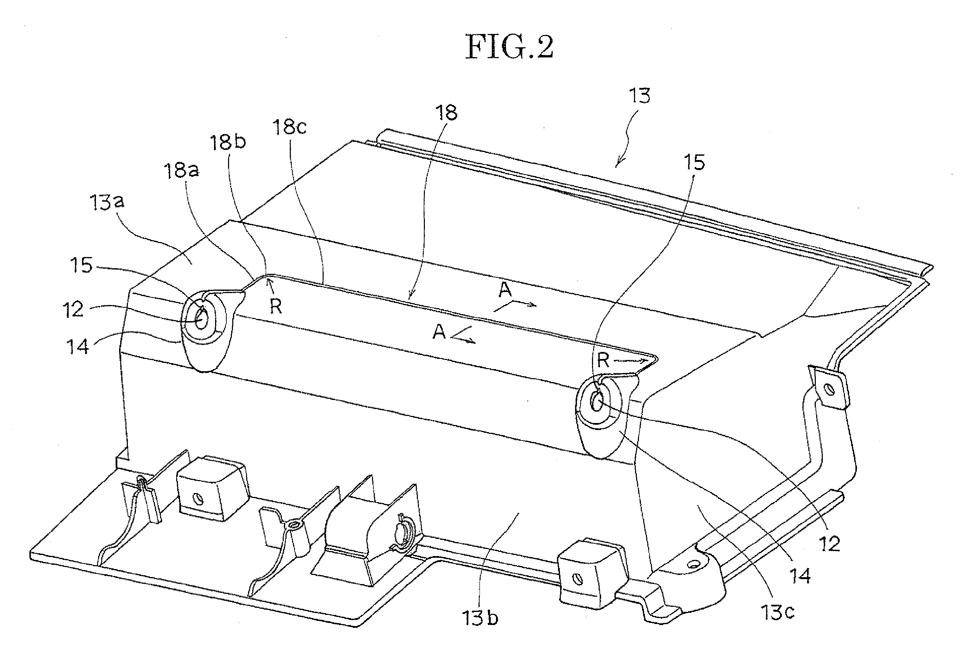

Furthermore, it would be desirable for an extended space upon an upper portion of a primary storage space to be treated as an extended space mold material that is capable of forming thereof by way of the primary storage portion 11, by causing the component for mounting upon the member of the vehicle body 13 to overhang with regard to an upper wall of the primary storage portion 11 thereof. In such a circumstance, the component for mounting upon the member of the vehicle body 13 would, as an instance thereof, comprise, at a minimum, an upper surface 13a, a rear surface 13b, and a pair of side surfaces 13c, and would also comprise a shape wherein a lower portion thereof forms an opening thereof, such as is shown in FIG. 2.

Thus, in the present circumstance, the mounting perforations 12 that are provided in the component for mounting upon the member of the vehicle body 13, with respect to the member of the vehicle body thereof, is installed with regard to an angle portion, a rigidity whereof is increased by the upper surface 13a and the rear surface 13b being bonded together. Each of the mounting perforations 12 is provided in an apex portion of each of a pair of mounting seats left and right 14, which protrudes from a vicinity of both edge portions of the angle portion.

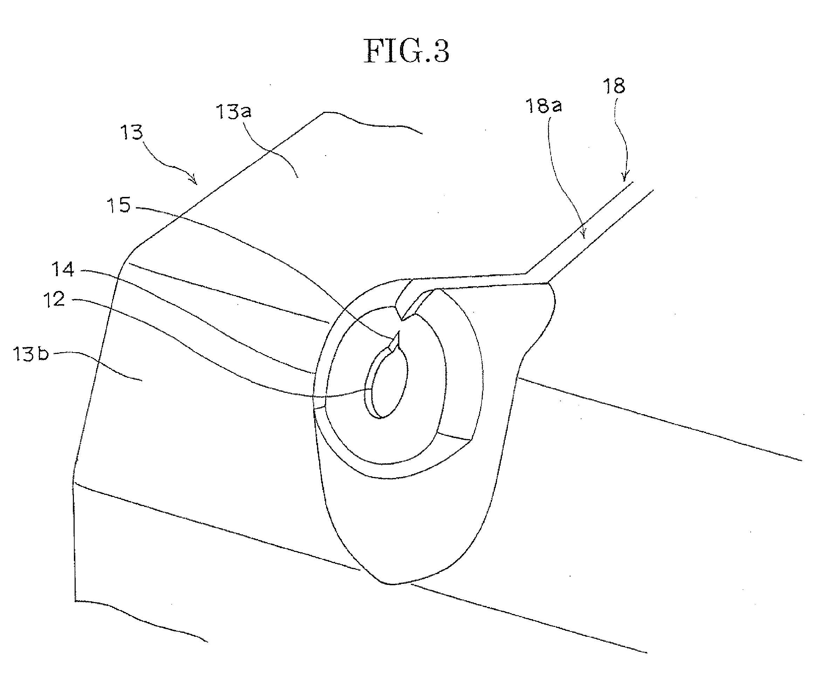

Each of the mounting perforations 12 is formed in approximately a shape of a drop of water, which comprises a partial angle portion 15. In such a circumstance, the mounting perforation with approximately the shape of the drop of water 12 is treated as being such as forming the partial angle portion 15 upon an upper portion of an elongated perforation that extends in a vertical direction, as shown in FIG.3. It would be permissible for the shape of the drop of water thereof to be treated as a circle that comprises the angle portion 15, an ellipse that comprises the angle portion 15, or an amorphous shape that comprises the angle portion 15.

Furthermore, the plurality of mounting perforation 12 that are formed in approximately the shape of the drop of water with respect to the component for mounting upon the member of the vehicle body 13 is joined between the angle portions 15 of the plurality of mounting perforations 12 thereof with a depression portion 18. It would be desirable for the depression portion 18 to be treated as comprising a left-right bilateral symmetry. Put more concretely, the depression portion 18 is treated as comprising either approximately a sideways croquet wicket shape or a sharply angled U shape when viewed horizontally from above, further comprising a vertical depression portion 18a, which extends from each respective angle portion 15 toward the fore portion of the container device body 2 in a required quantity, and a horizontal depression portion 18c, which further comprises a corner R portion 18b, between an end portion of both of the vertical depression portions 18a, and joins the corner R portions 18b thereof. In such a circumstance, the vertical depression portion 18a is formed from the mounting seat 14 through the upper surface 13a thereof. In addition, it is desirable that the corner R portion 18b be treated as comprising as large a radius as is possible, so as to allow smoothly turning around and breaking thereof.

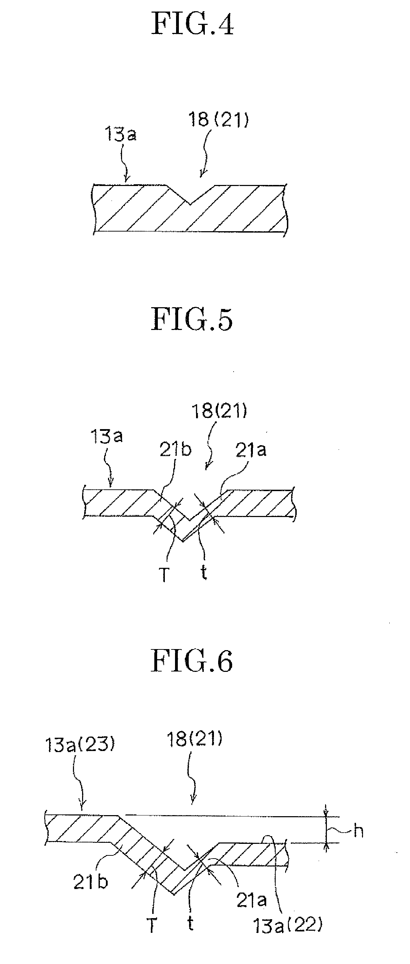

Furthermore, the depression portion 18 is treated as comprising a V-shaped depression 21, such as is shown in FIG. 4 to FIG. 6. It would be permissible for the V-shaped depression 21 thereof to form a thinning, such that a thickness of the upper surface 13a of the component for mounting upon the member of the vehicle body 13 is partially thinned out, such as is shown in FIG. 4, and it would also be permissible for the V-shaped depression 21 thereof to form a bend, so as to protrude into a rear face of the upper surface 13a of the component for mounting upon the member of the vehicle body 13, such as is shown in FIG. 5 and FIG. 6.

Thus, furthermore, an inner incline portion 21a of the V-shaped depression 21 is configured so as to be thinner than an outer incline portion 21b of the V-shaped depression 21, such as is shown in FIG. 5, i.e., such that T > t therein. In such a circumstance, a thickness of the outer incline portion 21b of the V-shaped depression 21 is either of a similar thickness to, or somewhat thinner than, a general surface portion of the upper surface 13a of the component for mounting upon the member of the vehicle body 13.

Instead of the foregoing, a general surface portion 22 that is contiguous with the inner incline portion 21a of the V-shaped depression 21 is configured so as to be lower than a general surface portion 23 that is contiguous with the outer incline portion 21b of the V-shaped depression 21, such as is shown in FIG. 6, i.e., a height differential h that is shown therein. In such a circumstance, the general surface portion 22 and 23 is the upper surface 13a of the component for mounting upon the member of the vehicle body 13. It is to be understood that, while a thickness differential is incorporated into the inner incline portion 21a and the outer incline portion 21b of the V-shaped depression 21 in FIG. 6, in a manner similar to that such as is shown in FIG. 5, it would also be possible not to incorporate such a thickness differential thereupon.

It is to be understood that the inner incline portion 21a and the outer incline portion 21b is set to an interior and an exterior with the sideways croquet wicket shape of the depression portion 18 as a baseline thereof.

Following is a description of an effect according to the embodiment.

In an emergency, as an instance thereof, when a vehicle is in a collision, a knee of a passenger who is seated in a passenger's seat of the vehicle is impelled into the lid body 3 of the container device 1, and is thereby received by the lid body 3 thereof. A force of the knee thereof that is received by the lid body 3 is transmitted to the member of the vehicle body by way of the container device body 2, and a recoil of the force of the knee thereof is returned from the member of the vehicle body to the knee of the passenger who is seated in the passenger's seat of the vehicle, by way of the container device body 2. In such a circumstance, an energy that is imparted thereto by the knee thereof is absorbed by the destruction of the container device body 2, and it is also possible thereby to minimize and reduce to a reasonable level the recoil that is returned to the knee of the passenger who is seated in the passenger's seat of the vehicle.

In such a circumstance, the component for mounting upon the member of the vehicle body 13 of the container device body 2 absorbs, by breaking, the energy that is imparted thereto by the knee thereof, and reduces to the reasonable level the recoil thereupon. Put another way, the component for mounting upon the member of the vehicle body 13 breaks along the depression portion 18, wherein the mounting perforation 12, which is approximately shaped as the drop of water, and further comprising the partial angle portion 15, serves as a base point thereof.

According to the embodiment, the container device body 2 is formed to separate into the primary storage portion 11 and the member mounting component for mounting upon the member of the vehicle body 13, further including the mounting perforation 12 with respect to the member of the vehicle body, thereby allowing breaking only the component for mounting upon the member of the vehicle body 13 with respect to the force of the knee of the passenger who is seated upon the passenger's seat of the vehicle thereof, and thereby allowing performing the absorption of the energy thereof.

Put another way, it is possible to treat a design that places an emphasis of the primary storage portion 11 upon a storage therein, and to treat a design that places an emphasis of the component for mounting upon the member of the vehicle body 13 upon the recoil thereupon, and thereby, a design of the container device body 2 is simplified, and a process of reducing to the reasonable level the recoil by way of the component for mounting upon the member of the vehicle body 13 is also simplified. It would be possible to treat the component for mounting upon the member of the vehicle body 13 as differing from the primary storage portion 11 in such as a thickness or a material composition thereof, in order to reduce the recoil thereupon to the reasonable level.

In such a circumstance, an angle portion is installed upon the component for mounting upon the member of the vehicle body 13 that further increases a rigidity thereof by bonding the upper surface 13a and the rear surface 13b thereof, and the mounting perforation 12 with respect to the member of the vehicle body is installed with respect to the angle portion with a strong rigidity thereof. It is thereby easy to render the recoil thereof at a reasonable level, neither too intense nor too weak.

Given that the primary storage portion 11 is preserved after the breaking of the component for mounting upon the member of the vehicle body 13, a reuse thereof, easily and inexpensively, is made possible by replacing only the component for mounting upon the member of the vehicle body 13 thereof.

In addition, whereas the force of the knee of the passenger who is seated upon the passenger's seat of the vehicle, and the recoil thereof, acts upon the mounting perforations 12 of the component for mounting upon the member of the vehicle body 13, given that each of the mounting perforations 12 thereof includes a partial angle 15, which is configured as further including approximately a shape of a droplet of water, a concentration of stress arises upon the partial angle portion 15 thereof, and it is thereby possible for the partial angle portion 15 thereof to serve as a base point of the breakage thereupon.

By joining a plurality of mounting perforations 12 each of which is formed in approximately the shape of the drop of water with respect to the component for mounting upon the member of the vehicle body 13 between the angle portion 15 of the plurality of mounting perforations 12 thereof with the depression portion 18, it is possible to cause the performance of the absorption of the energy with respect to the force thereto of the knee of the passenger who is seated upon the passenger's seat of the vehicle, while causing the breakage of the component for mounting upon the member of the vehicle body 13 from each respective angle portion 15 thereof, and in line with the depression portion 18 thereof, thereby facilitating effecting an energy absorption performance upon the component for mounting upon the member of the vehicle body 13 that accords with a design thereof. In addition, it is also easy thereby, as an instance thereof, to add a design such as would satisfy such as a control of a movement of a pelvic region of the passenger who is seated in the passenger's seat, or another safety condition thereof.

Furthermore, by treating the depression portion 18 as a V-shaped depression 21, and configuring an inner incline portion 21a of the V-shaped depression 21 to be thinner than an outer incline portion 21b causes the concentration of the stress to arise upon the V-shaped depression 21 by way of a differential of an intensity arising from a differential of a thickness of both sides of the V-shaped depression 21, allows making the V-shaped depression 21 thereof to be more easily breakable.

Another possibility would be, by treating the depression portion 18 as the V-shaped depression 21, and configuring a general surface 22 and 23 that is contiguous with the inner incline portion 21a of the V-shaped depression 21 to be lower than a general surface 22 and 23 that is contiguous with the outer incline portion 21b thereof, a shearing arises upon the V-shaped depression 21 by way of a differential in a height between the general surface 22 and 23 of the V-shaped depression 21 thereof, thus allowing making the V-shaped depression 21 thereof to be more easily breakable.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A mounting structure of a container device for a vehicle, configured to mount a container device that is installed within an instrument panel of a vehicle upon a member of a vehicle body that is installed within an interior of the instrument panel thereof,
the container device including a container device body and a lid body configured to be mounted upon an opening portion of the container device body so as to be capable of being opened and closed thereupon,
the container device body being formed into a primary storage portion, and a member mounting component for mounting upon the member of the vehicle body, the member mounting component including at least one mounting perforation with respect to the member of the vehicle body, and
the mounting perforation of the member mounting component being formed into approximately a shape of a droplet of water, the shape thereof having a partial angle portion.

2. The mounting structure of a container device for a vehicle according to claim 1,
the member mounting component including a plurality of mounting perforations with respect to the member of the vehicle body,
each of the plurality of mounting perforations being formed into approximately a shape of a droplet of water, the shape thereof having a partial angle portion,
wherein the angle portions of the plurality of mounting perforations are joined by a depression portion.

3. The mounting structure of a container device for a vehicle according to claim 2, wherein
the depression portion is a V-shaped depression including an inner incline portion and an outer incline portion, and
the inner incline portion of the V-shaped depression is configured so as to be thinner than the outer incline portion.

4. The mounting structure of a container device for a vehicle according to either of claim 2 or claim 3, wherein
the depression portion is a V-shaped depression, and
a general surface, which is contiguous with the inner incline portion of the V-shaped depression, is configured so as to be lower than a general surface, which is contiguous with the outer incline portion thereof.
